(19) Europäisches Patentamt
European Patent Office
Office européen des brevets

(11)　EP 2 428 830 A1

(12)　EUROPEAN PATENT APPLICATION
published in accordance with Art. 153(4) EPC

(43) Date of publication:
14.03.2012 Bulletin 2012/11

(51) Int Cl.:
*G02B 26/00* (2006.01)　*G01J 3/18* (2006.01)
*G02B 5/18* (2006.01)

(21) Application number: 10791416.0

(22) Date of filing: 31.05.2010

(86) International application number:
PCT/CN2010/073372

(87) International publication number:
WO 2010/148910 (29.12.2010 Gazette 2010/52)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 24.06.2009 CN 200910148173
24.07.2009 CN 200910159644

(71) Applicant: Huawei Technologies Co., Ltd.
Shenzhen, Guangdong 518129 (CN)

(72) Inventor: FU, Zhenghua
Shenzhen
Guangdong 518129 (CN)

(74) Representative: Körber, Martin Hans
Mitscherlich & Partner
Patent- und Rechtsanwälte
Sonnenstraße 33
80331 München (DE)

(54)　**OPTICAL FILTER AND SPECTROSCOPY METHOD THEREOF**

(57)　An optical filter and a light splitting method of the optical filter are provided. The optical filter includes a beam incidence portion, a programmable Micro Electro-Mechanical System (MEMS) grating, a beam receiving portion, and a drive and control module, where relative positions of the beam incidence portion, the programmable MEMS grating, and the beam receiving portion are fixed and are set in order that the beam receiving portion is located in an emergence direction of the multi-wavelength beam after the multi-wavelength beam is incident onto the programmable MEMS grating from the beam incidence portion so that the beam receiving portion is capable of receiving a beam with a specific wavelength. The optical filter is capable of freely and conveniently selecting the beams with a specific wavelength, and meanwhile, the optical filter has the advantages of a small size, and being easily controlled and integrated.

FIG. 2

EP 2 428 830 A1

**Description**

This application claims priority to Chinese Patent Application No. 200910148173.7, filed with the Chinese Patent Office on June 24, 2009 and entitled "OPTICAL FILTER AND LIGHT SPLITTING METHOD OF THE OPTICAL FILTER", which is incorporated herein by reference in its entirety. This application also claims priority to Chinese Patent Application No. 200910159644.4, filed with the Chinese Patent Office on July 24, 2009 and entitled "OPTICAL FILTER AND LIGHT SPLITTING METHOD OF THE OPTICAL FILTER", which is incorporated herein by reference in its entirety.

**FIELD OF THE INVENTION**

The present invention relates to the field of communications technologies, and in particular, to an optical filter and a light splitting method of the optical filter.

**BACKGROUND OF THE INVENTION**

The rapid development of communications and networks greatly enriches people's life, and at the same time, people have higher and higher requirements on the future communication system. Therefore, the future communication system needs to poss the capabilities of higher capacity, higher rate and wider coverage. Optical communication is a communication manner of using a light wave as a transmission medium. Although the light wave and a radio wave both belong to an electromagnetic wave, the frequency of the light wave is higher than that of the radio wave, and the wavelength of the light wave is shorter than that of the radio wave. Therefore, the optical communication has the advantages of a wide transmission frequency band, high communication capacity and strong anti-electromagnetic interference capability, and the optical communications technologies attract wide public concern accordingly.

In the optical communication system, a bandwidth of an optical fiber backbone network is generally increased through Dense Wavelength Division Multiplexing (Dense Wavelength Division Multiplexing, DWDM for short) technologies, where the DWDM technologies can combine optical signals with different wavelengths in one optical fiber and then send the signals, thereby improving transmission performance, increasing network capacity, and being capable of performing long-distance transmission. However, in the current optical communication system, it is generally required to monitor each wavelength in the system. For example, wavelength drift or energy change is monitored. However, the optical signal in the optical communication system multiplexes light with multiple wavelengths, which goes against the analyzing and monitoring of the wavelength information, so an optical filter is required to select the wavelength, and then subsequent processing such as analysis and monitoring is performed on the optical signal after wavelength selection. Especially, a wavelength tunable optical filter is widely noticed since the filter can freely select the required wavelength.

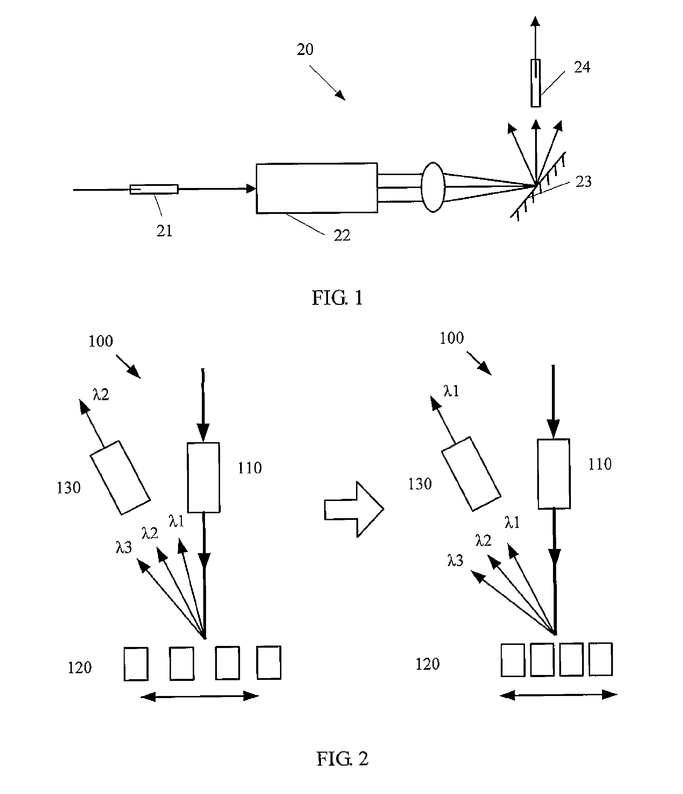

At present, the optical filter implements the wavelength tunable feature mainly through the following solution. In the solution, an optical filter 20 with a light splitting device and a Micro Electro-Mechanical System (MEMS) mirror are used, as shown in FIG. 1. The optical filter 20 includes a beam input end 21, a light splitting device 22, an MEMS mirror 23, and a beam output end 24, where the light splitting device 22 may be an angular dispersion prism. The light splitting device 22 may split the light in different wave bands, and the light in different wave bands is incident onto the MEMS mirror 23 at different angles. The light with a certain wavelength can be selected by adjusting an inclination angle of the MEMS mirror 23. The optical filter in this solution can freely select the wavelength, but the optical filter is big in size since two optical elements, the light splitting device 22 and the MEMS mirror 23, are included, so the optical filter is difficult to be integrated and controlled.

**SUMMARY OF THE INVENTION**

Accordingly, the technical problem to be solved by the present invention is to provide an optical filter, which is capable of fast selecting an output wavelength, has a small size, easily integrated and controlled.

In order to solve the above technical problems, an embodiment of the present invention provides an optical filter, where the optical filter includes:

a beam incidence portion, configured to transport multi-wavelength beams;
a programmable MEMS grating, where a plurality of grating units of the programmable MEMS grating is capable of moving with respect to each other to change a structure of the programmable MEMS grating;
a beam receiving portion, configured to receive beams with a specific wavelength in the multi-wavelength beams; and
a drive and control module, configured to drive and control the structure of the programmable MEMS grating to continuously change emergence angles of the beams with the specific wavelength;
where, relative positions of the beam incidence portion, the programmable MEMS grating and the beam receiving portion are fixed and are set in order that the beam receiving portion is located in an emergence direction of the multi-wavelength beam after the multi-wavelength beam is incident onto the programmable MEMS grating from the beam incidence portion so that the beam receiving portion can receive the beam with the specific wavelength.

An embodiment of the present invention further provides a light splitting method which is applied to an optical filter, where the optical filter includes a beam incidence portion, a programmable MEMS grating, a beam receiving portion, and a drive and control module. The method includes:

transporting, by the beam incidence portion, multi-wavelength beams, where the multi-wavelength beams are incident onto the programmable MEMS grating;
reflecting or transmitting, by the programmable MEMS grating, the incident multi-wavelength beams through the beam incidence portion;
driving and controlling, by the drive and control module, a structure of the programmable MEMS grating; and
receiving and outputting, by the beam receiving portion, beams with a specific wavelength in the multi-wavelength beams reflected or transmitted by the programmable MEMS grating.

On the basis of the above technical solutions, in the optical filter of the present invention, the programmable MEMS grating is adopted, so the beams with different wavelengths in the multi-wavelength beams are emergent at different emergence angles, and the emergence angles of the beams with different wavelengths can be continuously changed by controlling the structure of the programmable MEMS grating, so that the optical filter can freely and fast select the beams with a specific wavelength. Meanwhile, since the programmable MEMS grating is small in size, and is easily integrated and controlled, the optical filter based on the solutions of the present invention has the advantages of small size, and being easily operated and integrated.

**BRIEF DESCRIPTION OF THE DRAWINGS**

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic structural diagram of an optical filter in the prior art;
FIG. 2 is a schematic structural diagram of an optical filter according to an embodiment of the present invention;
FIG. 3 is a schematic structural diagram of another optical filter according to an embodiment of the present invention;
FIG. 4 is a schematic principle diagram of a programmable MEMS grating according to an embodiment of the present invention;
FIG. 5 is a schematic structural diagram of still another optical filter according to an embodiment of the present invention; and
FIG. 6 is a flow chart of a light splitting method according to an embodiment of the present invention.

**DETAILED DESCRIPTION OF THE EMBODIMENTS**

The technical solutions of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.
An embodiment of the present invention provides an optical filter, which includes: a beam incidence portion, a programmable MEMS (Micro Electro-Mechanical System, programmable micro electro-mechanical system) grating, a beam receiving portion, and a drive and control module. The beam incidence portion is configured to transport multi-wavelength beams. The programmable MEMS grating includes a plurality of grating units. The grating units can move with respect to each other, including horizontal moving and/or longitudinal moving with respect to each other. The beam receiving portion is configured to receive beams with a specific wavelength in the multi-wavelength beams. The drive and control module is configured to drive and control the structure of the programmable MEMS grating to continuously change emergence angles of the beams with the specific wavelength. Relative positions of the beam incidence portion, the programmable MEMS grating, and the beam receiving portion are fixed and are set in order that the beam receiving portion is located in an emergence direction of the multi-wavelength beam after the multi-wavelength beam is incident onto the programmable MEMS grating from the beam incidence portion so that the beam receiving portion can receive the beam with the specific wavelength.

In the optical filter of the embodiment of the present invention, the programmable MEMS grating is used, so the beams with different wavelengths in the multi-wavelength beams are emergent at different emergence angles, and the emergence angles of the beams with different wavelengths can be continuously changed by controlling the structure of the programmable MEMS grating, so the optical filter can freely and conveniently select the beams with a specific wavelength. Meanwhile, since the programmable MEMS grating is small in size, and is easily integrated and controlled, the optical filter based on the solutions of the present invention has the advantages of a small size, and being easily operated and integrated.

In the embodiment of the present invention, as shown in FIG. 2, an embodiment of the present invention provides an optical filter 100, where the optical filter 100 includes a beam incidence portion 110, a programmable MEMS grating 120, a beam receiving portion 130, and a drive and control module (not shown in the drawing). The beam incidence portion 110 may be an input waveguide device, for example, an optical fiber, and may be used to guide the transmission of the multi-wavelength beams (for example, composite beams). The beam receiving portion 130 may be an output waveguide device, for receiving the beams and capable of guiding beam transmission, and is located in an emergence direction after the multi-wavelength beams passing through the programmable MEMS grating 120. For example, the beam receiving portion 130 may be an optical fiber. The programmable MEMS grating 120 includes grating units capable of moving with respect to each other, so that the structure of the programmable MEMS grating changes with the moving of the grating units with respect to each other. The programmable MEMS grating is a programmable grating made by using MEMS technologies, where in the programmable grating, a micron-level grating structure may be manufactured by using a silicon micromachining technology, and programming control is performed on structure parameters of the programmable grating through an external control circuit to implement reallocation of light energy. Alternatively, the multiple grating units of the programmable MEMS grating may be formed by using photoetching technologies or technologies known by persons skilled in the art or in the semi-conductor art. The meaning of the term "programmable" in the "programmable MEMS grating" is that, the grating units are expectantly deformed through the programming control of a drive and control circuit, so as to adjust structure parameters such as a grating constant or a blaze angle, cause the change of light energy distribution of diffraction light and interference light, and obtain an expected characteristic of diffraction and interference energy distribution.

The multi-wavelength beam including multiple wavelengths is incident onto the programmable MEMS grating 120 from the beam incidence portion 110, and according to the following grating equation:

$$m\lambda = d\left(\sin\alpha + \sin\theta\right) \dots\dots\dots\dots\dots\dots\dots\dots\dots\dots\dots (1),$$

it can be known that, in the case that grating parameters are retained the same, the emergence angles of the incident light with different wavelengths are different, that is, the beams with different wavelengths in the multi-wavelength beam are split, where m is a grating level, $\lambda$ is a wavelength of the incident light, d is a grating structure parameter, $\alpha$ is an angle (that is, an incidence angle) between the incident light and a grating normal, and $\theta$ is an angle (that is, an emergence angle) between an emergence light and the grating normal.

The drive and control module drives and controls the structure of the programmable MEMS grating, so as to freely select a beam with an expected wavelength. As shown in FIG. 2, when it is required to select a beam with a wavelength $\lambda 1$ in the multi-wavelength beams, the programmable MEMS grating is controlled through the drive and control module, so as to narrow distances among the multiple grating units of the programmable MEMS grating 120, that is, the grating structure parameter d is reduced. For the beam with the wavelength $\lambda 1$, $d$ (sin $\alpha$ + sin $\theta$) must be retained the same, and then, sin $\theta$ must be increased. Therefore, the emergence angle of the specific beam with the wavelength $\lambda 1$ is changed, and the beam receiving portion 130 may receive the specific beam accordingly. In addition, since the drive and control module performs the programming control on the moving of multiple grating units, the required wavelength can be fast split and selected, and the split beam with the specific wavelength is more easily received by the beam receiving portion, thereby decreasing the requirements on beam collimation in the optical filter, improving the speed of selecting the wavelength by the optical filter, and facilitating the operation.

Therefore, the optical filter according to an embodiment of the present invention can freely and conveniently select the beam with the specific wavelength. In addition, the MEMS element is easily and massively produced and has a low price due to a small size and low drive power consumption, so that the entire optical filter has high price competitiveness. In another aspect, as for a development direction, the programmable MEMS grating is easily integrated and controlled.

In the embodiment of the present invention, the relative positions of the beam incidence portion, the programmable MEMS grating, and the beam receiving portion may be fixed, so as to lower the requirements of the optical filter on stability. Moreover, the relative positions of the three elements may be set in order that the beam receiving portion is located in an emergence direction of the multi-wavelength beam after the multi-wavelength beam is incident onto the programmable MEMS grating from the beam incidence portion so that the beam receiving portion can receive the beam with the specific wavelength. Therefore, the optical filter may enable the beam receiving portion to easily receive the beam with the specific wavelength merely through controlling the emergence angle of the beam by the drive and control module, so that beam coupling is easily performed, and the output wavelength is easily and fast selected.

In the embodiment of the present invention, the programmable MEMS grating may be a reflection grating or a transmission grating. When the programmable MEMS grating is the reflection grating, the beam incidence portion and the beam receiving portion are located at the same side of the programmable MEMS grating, and as shown in FIG. 2, the beam incidence portion 110 and the beam receiving portion 130 are located at the same side of the programmable MEMS grating 120. When the programmable MEMS grating is the transmission grating, the beam incidence portion and the beam receiving portion are located at two sides of the programmable MEMS grating, and then the beam receiving portion is located in the emergence direction of the multi-wavelength beam after the multi-wavelength beam is incident onto the programmable MEMS grating from the beam incidence portion, so that the beam receiving portion can receive the beam with the specific wavelength.

In the embodiment of the present invention, the optical filter may further include a first lens, for example, a collimating lens, and the first lens may be located between the beam incidence portion and the programmable MEMS grating. For example, the first lens is located on an end portion of the beam incidence portion, so that the multi-wavelength beams emergent from the beam incidence portion are collimated and then are incident onto the programmable MEMS grating. The optical filter may further include a second lens, for example, a self-focusing lens, and the second lens is located between the programmable MEMS grating and the beam receiving portion. For example, the second lens is located on an end portion of the beam receiving portion, so that after being aggregated, the beams with the specific wavelength are received by the beam receiving portion, thereby facilitating the receiving of the beams with the specific wavelength, and increasing beam coupling efficiency. The first lens and the second lens may be a cylindrical lens or a spherical lens, and a surface of the lens is plated with an antireflection coating to facilitate the coupling of the beams.

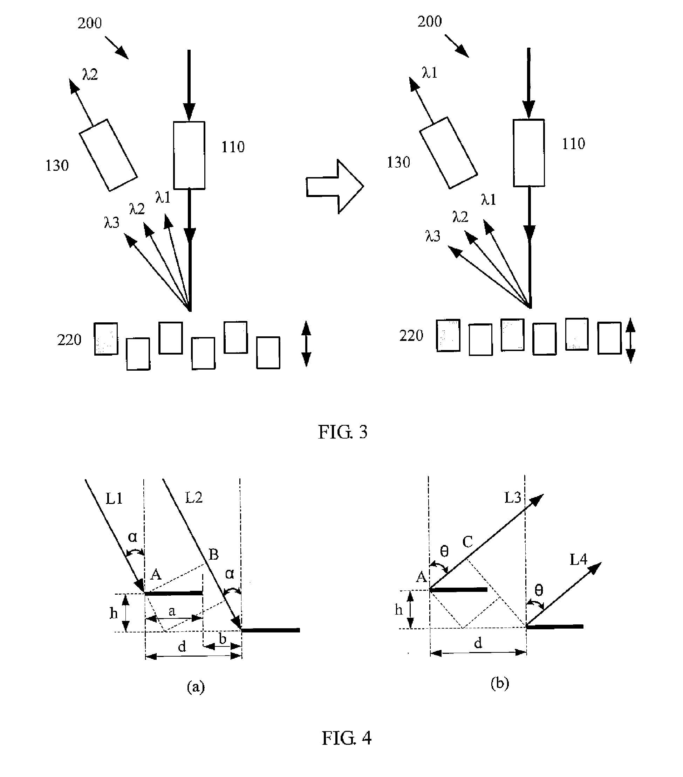

In the embodiment of the present invention, as shown in FIG. 3, an embodiment of the present invention further provides an optical filter 200, where the optical filter 200 includes a beam incidence portion 110, a programmable MEMS grating 220, a beam receiving portion 130, and a drive and control module (not shown in the drawing). The programmable MEMS grating 220 may be a phase grating. It is supposed that the width of the grating unit is a, a lateral interval of adjacent grating units is b, a longitudinal height difference of adjacent grating units is h, and the grating structure parameter of the programmable MEMS grating is d, d = a + b. As shown in FIG. 4, it is supposed that any two beams L1 and L2 separated by a distance d are incident onto the programmable MEMS grating at an incidence angle $\alpha$ and are emergent at an emergence angle $\theta$, and an operating principle of the phase-type programmable MEMS grating is analyzed accordingly.

In FIG. 4(a), an optical path difference r21 between the incidence beam L2 and the incidence beam L1 is as follows:

$$r21 = (d - h \cdot \tan \alpha) \cdot \sin \alpha + h/\cos \alpha = d \cdot \sin \alpha + h \cdot \cos \alpha \dots\dots\dots (2).$$

In FIG. 4(b), an optical path difference r43 between the emergence beam L4 and the emergence beam L3 is as follows:

$$r43 = -(d - h/\tan \theta) \cdot \sin \theta = -d \cdot \sin \theta + h \cdot \cos \theta \dots\dots\dots\dots\dots (3)$$

Therefore, optical path variation r and the corresponding phase difference $\varphi$ caused by the function of the programmable MEMS grating are respectively as follows:

$$r = r21 + r43 = d(\sin \alpha - \sin \theta) + h(\cos \alpha + \cos \theta) \dots\dots\dots (4)$$

$$\varphi = [d(\sin \alpha - \sin \theta) + h(\cos \alpha + \cos \theta)] \cdot 2\pi/\lambda \dots\dots\dots\dots (5)$$

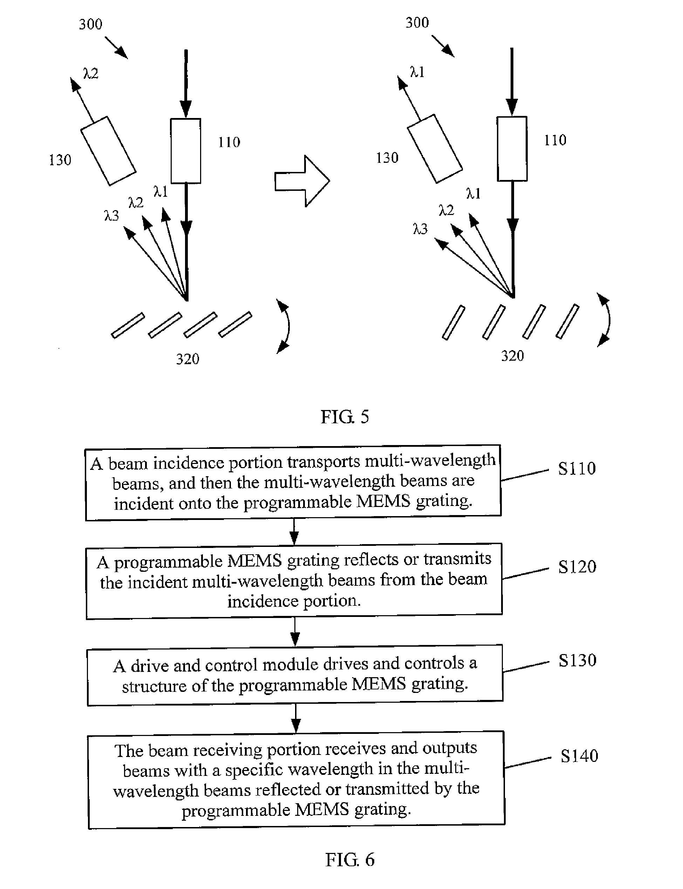

It can be known from Equation (5) that, the phase difference caused by the phase-type programmable MEMS grating is formed by two parts, where one is a phase difference caused by the change of a lateral interval of the adjacent grating units, and the other one is a phase difference caused by the change of a longitudinal height difference of the adjacent grating units. Therefore, the drive and control module controls the moving of the multiple grating units with respect to each other, so that when the lateral interval of the phase-type programmable MEMS grating is changed (as shown in FIG. 3) and/or the longitudinal height difference of the phase-type programmable MEMS grating is changed (as shown in FIG. 5), the phase difference of the beams is changed, and therefore, the emergence angle of the beam with the specific wavelength is changed, that is, the phase-type programmable MEMS grating may also freely select the wavelength. Moreover, the optical filter can fast and easily select the specific wavelength through the drive and control module, purity of the selected light is high, and consumption of the light energy is little.

In the embodiments of the present invention, an embodiment of the present invention further provides an optical filter 300, where the optical filter 300 includes a beam incidence portion 110, a programmable MEMS grating 320, a beam receiving portion 130, and a drive and control module (not shown in the drawing). The programmable MEMS grating 320 may be a blazed grating. According to basic knowledge of the optical principle, it can be also analyzed that, an emergence angle of a beam with a specific wavelength may be changed by changing a blazed angle of the blazed grating. Therefore, the optical filter may also freely select the wavelength.

As for the components, a relative position relationship, structure and efficiency involved in the optical filter in this embodiment, reference can be made to the content of the embodiments shown in FIG. 2 and FIG. 3, which is not described in detail herein again.

An embodiment of the present invention further provides a light splitting method which is applied to an optical filter, where the optical filter includes a beam incidence portion, a programmable MEMS grating, a beam receiving portion, and a drive and control module. As shown in FIG. 6, the method includes the following steps.

S110: The beam incidence portion transports multi-wavelength beams, and then the multi-wavelength beams are incident onto the programmable MEMS grating.

S120: The programmable MEMS grating reflects or transmits the incident multi-wavelength beams that are from the beam incidence portion.

S130: The drive and control module drives and controls a structure of the programmable MEMS grating.

S140: The beam receiving portion receives and outputs beams with a specific wavelength in the multi-wavelength beams that are reflected or transmitted by the programmable MEMS grating.

Taking FIG. 2 as an example, the beam incidence portion 110 transports the multi-wavelength beams, and the multi-wavelength beams are incident onto the programmable MEMS grating 120; the programmable MEMS grating 120 reflects the incident multi-wavelength beams that are from the beam incidence portion 110; the drive and control module (not shown in the drawing) may drive and control the structure of the programmable MEMS grating 120 on the basis of a current structure of the programmable MEMS grating 120, a relative position relationship (that is, an incidence angle of the multi-wavelength beam and an emergence angle of the beam with the specific wavelength) among the beam incidence portion 110, the programmable MEMS grating 120, and the beam receiving portion 130, and a wavelength (for example, $\lambda 2$ or $\lambda 1$) of an expected output beam; and then, the beam receiving portion 130 receives and outputs the beam with the specific wavelength (for example, $\lambda 2$ or $\lambda 1$) in the multi-wavelength beam reflected by the programmable MEMS grating 120.

In the above embodiment, step S130 has no special limit on time sequence, as long as step S130 is performed before step S140. For example, step S130 may be performed before step S110 or step S120. Since the light splitting method according to the embodiment of the present invention may be applied to the optical filter based on the programmable MEMS grating, the method can continuously change the emergence angles of the beams with different wavelengths to implement fast and accurate light splitting.

The optical filter 100 in FIG. 2 is taken as an example to describe a method for changing the structure of the programmable MEMS grating through the drive and control module. When the optical filter 100 expects to select a beam with a wavelength $\lambda 1$ in the multi-wavelength beam, the grating structure parameter d of the programmable MEMS grating may be determined (that is, an interval between adjacent grating units is determined) according to a relative position between the beam incidence portion 110 and the beam receiving portion 130, for example, according to the incidence angle of the multi-wavelength beam and the emergence angle of the beam with the specific wavelength, and on the basis of Equation (1). Then, the drive and control module controls the movement among the grating units of the programmable MEMS grating according to the current structure of the programmable MEMS grating. For example, a voltage of the programmable MEMS grating is increased or reduced to change the structure of the programmable MEMS grating, so that the beam with the wavelength $\lambda 1$ is coupled into the beam receiving portion 130. When the optical filter 100 expects to select, from the multi-wavelength beams, a beam with a wavelength $\lambda 2$, the drive and control module controls the structure of the programmable MEMS grating on the basis of the same method, so that the beam with the wavelength $\lambda 2$ is coupled into the beam receiving portion 130.

Persons skilled in the art may further realize that, in combination with the embodiments herein, units and algorithm steps of each example described can be implemented with electronic hardware, computer software, or a combination of electronic hardware and computer software. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the embodiments of the present invention.

In combination with the embodiments herein, steps of the method or algorithm described may be directly implemented using hardware, a software module executed by a processor, or the combination of hardware and a software module executed by a processor. The software module may be placed in a Random Access Memory (RAM), a memory, a Read-Only Memory (ROM), an Electrically Programmable ROM, an Electrically Erasable Programmable ROM, a register, a hard disk, a removable magnetic disk, a CD-ROM, or any storage medium of other forms well-known in the technical field.

The present invention has been disclosed through accompanying drawings and exemplary embodiments, but is not intended to be limited thereto. Various variations and modifications made by persons skilled in the art without departing from the spirit and essense of the present invention fall within the scope of the present invention as defined by the appended claims.

**Claims**

1.  An optical filter, comprising:

    a beam incidence portion, configured to transport multi-wavelength beams;
    a programmable Micro Electro-Mechanical System (MEMS) grating, wherein a plurality of grating units of the programmable MEMS grating is capable of moving with respect to each other to change a structure of the programmable MEMS grating;
    a beam receiving portion, configured to receive beams with a specific wavelength in the multi-wavelength beams; and
    a drive and control module, configured to drive and control the structure of the programmable MEMS grating to continuously change emergence angles of the beams with the specific wavelength;
    wherein, relative positions of the beam incidence portion, the programmable MEMS grating, and the beam receiving portion are fixed and are set in order that the beam receiving portion is located in an emergence direction of the multi-wavelength beam after the multi-wavelength beam is incident onto the programmable MEMS grating from the beam incidence portion so that the beam receiving portion is capable of receiving the beam with the specific wavelength.

2.  The optical filter according to claim 1, wherein the programmable MEMS grating is a reflection grating, and the beam incidence portion and the beam receiving portion are located at the same side of the programmable MEMS grating.

3.  The optical filter according to claim 1, wherein the programmable MEMS grating is a transmission grating, and the beam incidence portion and the beam receiving portion are located at two sides of the programmable MEMS grating.

4.  The optical filter according to any one of claims 1 to 3, wherein the programmable MEMS grating is a phase grating or a blazed grating.

5.  The optical filter according to any one of claims 1 to 3, wherein the optical filter comprises a first lens, the first lens is located between the beam incidence portion and the programmable MEMS grating to collimate the multi-wavelength beams emergent from the beam incidence portion.

6.  The optical filter according to any one of claims 1 to 3, wherein the optical filter further comprises a second lens, the second lens is located between the programmable MEMS grating and the beam receiving portion, so that after being aggregated, the beams with the specific wavelength are received by the beam receiving portion.

7.  A light splitting method, comprising:

    transporting received multi-wavelength beams onto a programmable Micro Electro-Mechanical System (MEMS) grating; controlling a structure of the programmable MEMS grating, reflecting or transmitting the incident multi-wavelength beams through the programmable MEMS grating, and outputting beams with a specific wavelength in the multi-wavelength beams in a specific direction.

8. The method according to claim 7, wherein the controlling the structure of the programmable MEMS grating, and reflecting or transmitting the incident multi-wavelength beams through the programmable MEMS grating comprise:

   controlling structure parameters of the programmable MEMS grating, and reflecting or transmitting the incident multi-wavelength beams through the programmable MEMS grating.

9. The method according to claim 7, wherein the method is applied to an optical filter, the optical filter comprises a beam incidence portion, a programmable MEMS grating, a beam receiving portion, and a drive and control module, and the method comprises:

   transporting, by the beam incidence portion, multi-wavelength beams, wherein the multi-wavelength beams are incident onto the programmable MEMS grating;
   reflecting or transmitting, by the programmable MEMS grating, the incident multi-wavelength beams that are from the beam incidence portion;
   driving and controlling, by the drive and control module, a structure of the programmable MEMS grating; and
   receiving and outputting, by the beam receiving portion, beams with a specific wavelength in the multi-wavelength beams that are reflected or transmitted by the programmable MEMS grating.

10. The method according to claim 9, wherein the drive and control module drives and controls the structure of the programmable MEMS grating on the basis of a current structure of the programmable MEMS grating, a relative position relationship between the beam incidence portion, the programmable MEMS grating, and the beam receiving portion, and a wavelength of an expected output beam.

FIG. 1

FIG. 2

FIG. 3

(a)                          (b)

FIG. 4

## FIG. 5

FIG. 5

## FIG. 6

| | |
|---|---|
| A beam incidence portion transports multi-wavelength beams, and then the multi-wavelength beams are incident onto the programmable MEMS grating. | S110 |
| A programmable MEMS grating reflects or transmits the incident multi-wavelength beams from the beam incidence portion. | S120 |
| A drive and control module drives and controls a structure of the programmable MEMS grating. | S130 |
| The beam receiving portion receives and outputs beams with a specific wavelength in the multi-wavelength beams reflected or transmitted by the programmable MEMS grating. | S140 |

FIG. 6

# INTERNATIONAL SEARCH REPORT

| International application No. |
| --- |
| PCT/CN2010/073372 |

## A. CLASSIFICATION OF SUBJECT MATTER

SEE THE EXTRA SHEET

According to International Patent Classification (IPC) or to both national classification and IPC

## B. FIELDS SEARCHED

Minimum documentation searched (classification system followed by classification symbols)

IPC: G02B, G01J 3

Documentation searched other than minimum documentation to the extent that such documents are included in the fields searched

Electronic data base consulted during the international search (name of data base and, where practicable, search terms used)

WPI,EPODOC,PAJ,CNKI,CNPAT:MEMS, MOEMS, micro electro mechanical system, grating, raster, wavelength, spectroscopy, filter, DWDM, programmable

## C. DOCUMENTS CONSIDERED TO BE RELEVANT

| Category* | Citation of document, with indication, where appropriate, of the relevant passages | Relevant to claim No. |
| --- | --- | --- |
| X | US6643065B1 (SILBERMAN, Donn Michael) 04.Nov.2003 (04.11.2003) column 4, line 4-column 5,line 36, column 6, line 57-column7, line 3, column 7, lines 50- 60, column 8, lines 35-61 in the description, figures 1-2,4,7 | 1-4,7-10 |
| Y | | 5-6 |
| Y | US20040012856A1 (GUTIN, Mikhail A.) 22.Jan.2004 (22.01.2004) paragraphs 0032-0045 in the description, figure 1 | 5-6 |
| A | US6763163B1(FORD, Joseph Earl et al.)13.Jul.2004(13.07.2004) the whole document | 1-10 |
| A | US20030072068A1(DEUTSCH, Erik R. et al.)17.Apr.2003 (17.04.2003) the whole document | 1-10 |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 20.Aug.2010(20.08.2010) | **02 Sep. 2010 (02.09.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>GAO, Wang<br>Telephone No. (86-10)62084085 |

Form PCT/ISA /210 (second sheet) (July 2009)

<table>
<tr><td colspan="2"><strong>INTERNATIONAL SEARCH REPORT</strong></td><td>International application No.<br>PCT/CN2010/073372</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | US20020167245A1 (HUNG, Elmer S. et al.)14.Nov.2002 (14.11.2002) the whole document | 1-10 |
| A | US20070194239A1 (MCALLISTER, Abraham et al.)23.Aug. 2007(23.08.2007) the whole document | 1-10 |
| A | CN101308234A (CHONGQING UNIVERSITY) 19.Nov.2008 (19.11.2008) the whole document | 1-10 |
| A | CN101387552A (CHONGQING UNIVERSITY) 18.Mar.2009 (18.03.2009) the whole document | 1-10 |

Form PCT/ISA /210 (continuation of second sheet ) (July 2009)

## INTERNATIONAL SEARCH REPORT
### Information on patent family members

| International application No. |
| --- |
| PCT/CN2010/073372 |

| Patent Documents referred in the Report | Publication Date | Patent Family | Publication Date |
| --- | --- | --- | --- |
| US6643065B1 | 04.11.2003 | NONE | |
| US20040012856A1 | 22.01.2004 | US7099086B2 | 29.08.2006 |
| | | US5999319A | 07.12.1999 |
| | | WO0142825A1 | 14.06.2001 |
| | | AU4516501A | 18.06.2001 |
| | | US6421179B1 | 16.07.2002 |
| US6763163B1 | 13.07.2004 | NONE | |
| US20030072068A1 | 17.04.2003 | US7046410B2 | 16.05.2006 |
| US20020167245A1 | 14.11.2002 | US6724125B2 | 20.04.2004 |
| | | AU2002250271A1 | 19.09.2002 |
| | | EP1373963A2 | 02.01.2004 |
| | | US6329738B1 | 11.12.2001 |
| | | US6664706B1 | 16.12.2003 |
| | | US20020167695A1 | 14.11.2002 |
| | | WO02071132A2 | 12.09.2002 |
| US20070194239A1 | 23.08.2007 | US20100078564A1 | 01.04.2010 |
| | | WO2007089770A2 | 09.08.2007 |
| CN101308234A | 19.11.2008 | CN100565258C | 02.12.2009 |
| CN101387552A | 18.03.2009 | NONE | |

Form PCT/ISA/210 (patent family annex) (July 2009)

## INTERNATIONAL SEARCH REPORT

International application No.

PCT/CN2010/073372

Continuation of second sheet A.   CLASSIFICATION OF SUBJECT MATTER
G02B26/00(2006.01)i
G01J3/18(2006.01)i
G02B5/18(2006.01)i

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910148173

- CN 200910159644